(19)

Europäisches
Patentamt
European
Patent Office
Office européen
des brevets

(11)  **EP 2 919 404 B1**

(12)  **EUROPEAN PATENT SPECIFICATION**

(45) Date of publication and mention
of the grant of the patent:
**20.07.2016   Bulletin 2016/29**

(51) Int Cl.:
***H04J 14/02*** *(2006.01)*

(21) Application number: **14305343.7**

(22) Date of filing: **10.03.2014**

(54)  **Multiplexing system and demultiplexing system for WDM channel transmission**

Multiplexsystem und System zum Demultiplexen für WDM-Kanalübertragung

Système de multiplexage et de démultiplexage d'une transmission de canal WDM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.09.2015   Bulletin 2015/38**

(73) Proprietor: **ALCATEL LUCENT
92100 Boulogne-Billancourt (FR)**

(72) Inventors:
• **Charlet, Gabriel
91620 Nozay (FR)**

• **Rios Muller, Rafael
91620 Nozay (FR)**

(74) Representative: **Wetzel, Emmanuelle et al
Alcatel-Lucent
Intellectual Property Business Group
70430 Stuttgart (DE)**

(56) References cited:
**WO-A1-01/19007          WO-A1-2011/113679
WO-A1-2012/163301      WO-A2-02/054642
US-A1- 2009 022 618**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 919 404 B1

## Description

The present document relates to multiplexing and demultiplexing systems. In particular, the present document relates to multiplexing and demultiplexing systems for transmission of WDM channels according to a WDM channel grid providing a high spectral efficiency.

In current optical WDM systems, WDM channels can be combined either with optical couplers or with wavelength multiplexers. Optical couplers provide no filtering function, i.e. the full signal spectrum provided at the inputs is coupled to the output of the coupler. Using optical couplers for combining optical channels has some disadvantages. First, the attenuation caused by optical couplers increases with the number of channels to combine. For example, combining 100 channels leads to an attenuation of approximately 20dB. Said attenuation may be compensated by using optical amplifiers. However, adding optical amplifiers after the optical coupler leads to a poor OSNR (optical signal to noise ratio) because of low input power. Attenuation could also be compensated by adding optical amplifiers before the coupler, but here amplified spontaneous emission (ASE) noise recombination will degrade the optical signal noise ratio (OSNR) after the coupler. Specifically, when using an optical coupler arrangement comprising multiple optical couplers and multiple optical amplifiers, the ASE of said optical amplifiers leads to an unacceptable OSNR.

Most WDM systems use wavelength multiplexers to combine channels with low loss. Said multiplexer comprises a filter unit providing an optical filter function. The 3dB-bandwidth of said filter function is usually equal or slightly smaller than the channel spacing. This introduces channel distortions and thus degrades the system performance when bandwidth of the optical signal to be transmitted in an optical channel is very close to channel spacing.

International Patent Application WO 2012/163301 A1 relates to an apparatus for colourless add in an optical communication system. The apparatus comprises a plurality of switches coupled to a plurality of corresponding colorless laser transmitters, an odd channel coupler coupled to each of the switches, an even channel coupler coupled to each of the switches, and an interleaver coupled to the odd channel coupler and the even channel coupler.

International Patent Application WO 02/054642 A2 discloses an optical dense wavelength division multiplexer including an interleaver and power combiners. Outputs of the power combiners feed the interleaver's inputs. The multiplexer provides a set of inputs of each power combiner, and a multiplexed signal output at the interleaver's output. Each input is not single wavelength-specific.

International Patent Application WO 01/19007 A1 discloses a wavelength division demultiplexing device utilizing a polarization-based filter or a multi-cavity etalon (e.g., a multi-cavity Fabry-Perot etalon) to obtain a flat-top filter response which can be utilized to create a flat-top slicer which separates out odd and even wavelengths, or upper and lower channels of an input WDM signal.

Hence, there is a need to provide for an improved optical multiplexing system which provides an optimized transmission behavior without causing channel distortions in optical transmission networks with efficient bandwidth usage. Similarly, a demultiplexing system for demultiplexing optical channels in optical transmission networks with efficient bandwidth usage is desired.

According to a first aspect, an optical multiplexing system is disclosed. The optical multiplexing system comprises a first multiplexer, a second multiplexer and an optical coupler. Said first multiplexer comprises at least a first input for receiving a first optical channel set comprising one or more optical channels of an optical channel grid for a WDM system. Similarly, the second multiplexer comprises at least a first input for receiving a second optical channel set comprising one or more optical channels of the optical WDM channel grid. The optical channels of the first and second channel set may be different optical channels of the optical channel grid.

In embodiments, a channel set may include only one optical channel and inputs of the multiplexers each receive a single optical channel. In the following, a channel set is sometimes also called a group of channels. For example, the first input of the first multiplexer receives a first optical channel, and the first input of the second multiplexer receives a second optical channel of the optical channel grid. In other embodiments, a channel set may include a plurality of neighboring optical channels, i.e. optical channels having an adjacent frequency or wavelength in the optical channel grid. For example, the first input of the first multiplexer receives a first set of contiguous optical channels, and the first input of the second multiplexer receives a second set of contiguous optical channels of the optical channel grid.

The inputs of the optical coupler may be coupled with the outputs of the first and second multiplexer for combining and transmitting the first and second channel sets provided at the outputs of the multiplexers via a common optical transmission path.

The optical channels of the WDM channel grid are distributed across the at least two multiplexers such that one channel of the first optical channel set and one channel of the second optical channel set are adjacent channels of the optical channel grid. If there is only a single channel in a channel set, the channel of the first optical channel set and the channel of the second optical channel set are adjacent channels, i.e. they are neighboring channels of the channel grid. In case of channel sets comprising a plurality of optical channels (2 or more channels per channel set; please note that the number of channels per channel set may differ and need not be identical), the last optical channel of the first optical channel set (in terms of frequency or wavelength) may be adjacent (in terms of frequency or wavelength) to the first optical channel of the second optical channel set. In other words, adjacent optical channels are assigned to different multiplexers.

The first multiplexer comprises a first filter unit having a first filter function for filtering the optical signals of one or more optical channels received at the first input of the first multiplexer. If the first multiplexer has more than one input, a respective filter unit for each input may be provided. Similarly, the second multiplexer comprises a second filter unit having a second filter function for filtering the optical signals of one or more optical channels received at the first input of the second multiplexer. If the second multiplexer has more than one input, a respective filter unit for each input may be provided. The filter units of the first and second multiplexers are configured such that the 3dB-bandwidths of the first and second filter functions are larger than the sum of the bandwidths of the channels that are associated to the respective input of the multiplexers. By means of said extended filter bandwidths, a cut-off of the edges of the signals associated with the respective channels can be avoided because the filter bandwidth of a filter function is broader than the (accumulated) signal bandwidth transmitted in the respective optical channel(s) associated with the filter, respectively, broader than the channel spacing or a respective multiple of the channel spacing if a channel set includes multiple channels arranged based on the channel spacing. In consequence, the bandwidths of the first and second filter functions associated with the filter units of the first and second multiplexers partially overlap. On the other side, since adjacent optical channels are assigned to different multiplexers having respective filter functions, adjacent channels are not impaired (e.g. cut off) by the filter functions of the respective other multiplexer so that a dense packaging of optical channels without degradation of optical signals in the channel grid without any gap in-between channels or with only a small gap between adjacent channels is achieved. In other words, the configuration of the supplied optical signals is such that no adjacent channels are provided at any two inputs of one multiplexer to avoid signal degradations from overlapping filter functions.

In order to cut off (remove) noise, e.g. due to ASE, from outside of the channel spectra, the extent to which the filter bandwidth of a filter function is broader than the (accumulated) signal bandwidth of the associated optical channel(s) should be limited and as small as possible. Preferably, filter functions having a steep slope are employed. For example, the overlap of filter functions associated with the filter units of the first and second multiplexers may be limited to the slopes of the filter functions, while the flat filter passbands do not or not significantly overlap.

In order to enhance the bandwidth efficiency of the optical transmission system, the spectrum of the optical signal(s) may have a rectangular shape or approximately a rectangular shape. By using pulse shaping units (e.g. based on digital signal processing) RRC (Root Raised Cosine)-type spectra having a roll-off close to zero and a spectrum width (in GHz) equal to the baudrate are available, and optical channel signals comprising an approximate rectarigular or square spectrum can be obtained. If the roll-off is 0.1, the spectrum is equal to 1.1 times the baudrate, which is sufficiently close to a rectangular spectrum. If the roll-off is 0.01, the spectrum is equal to 1.01 times the baudrate, which is very close to a rectangular spectrum. In general, roll-offs smaller than 0.2 are considered to produce a rectangular or square spectrum. For such kind of spectrum where a significant portion of the spectrum energy is contained in the edge of the spectrum, an uncontrolled filtering of the channel spectrum would induce a penalty. In the proposed system, the signal bandwidth to be transmitted within a single channel can be very close to the channel spacing, i.e. nearly the whole channel bandwidth can be used for transmitting optical channel signals. By upper-mentioned overlapping of filter bandwidths and said distribution of adjacent channels/adjacent channel set across multiple multiplexers, bandwidth efficiency is significantly increased.

According to embodiments, a bandwidth of a filter function is defined as the frequency range outside which range the spectrum is being filtered out as a result of applying the filter function. For example, the bandwidth of the filter function may be defined at a certain decrease (attenuation) of the filter transfer function, i.e., the 3dB-bandwidth is defined for 3dB attenuation, the 1dB-bandwidth for 1dB attenuation, and the 0.5dB-bandwidth for 0.5dB attenuation, etc. In embodiments, the filter functions of the filter units may be configured such as to overlap with their frequency ranges that correspond to the 1dB bandwidths or the 0.5dB-bandwidths of the first and second filter functions. In other words, the 1dB-bandwidths or the 0.5dB-bandwidths of the first and second filter functions overlap. Thus, the channels are filtered without distortion, while the overlap between bandwidths of the first and second filter functions remains small allowing high filtering of ASE noise. In other words, the bandwidths of the first and second filter functions start overlap at an attenuation lower than 3dB and overlap at attenuations 3dB and higher. The overlap of the filter functions may start between 0dB and 1dB attenuation level, and, preferably, between 0.5dB and 1dB attenuation level.

According to embodiments, the overlap of the bandwidths of the first and second filter functions is smaller than the channel spacing of the channel grid, or of the channel bandwidth. Preferably, the overlap of the bandwidths of the first and second filter functions is smaller than 50% (1/2), 25% (1/4) or even 12.5% (1/8) of the channel spacing of the channel grid, or of the channel bandwidth.

Limiting the overlap to one channel spacing or less is advantageous because, when filtering one channel, the overlap broader than the channel spacing would allow unfiltered noise on a frequency range of two channels adjacent to the filtered channel.

According to embodiments, the first and second multiplexers each comprise a wavelength selective switch (WSS) with free programmable filtering for each input of the first and second multiplexer. The WSS may be programmable according to a frequency pattern comprising discrete frequency steps. In other words, the filtering function provided to the optical signals received at each input of the WSS can be varied in discrete frequency steps. For example, depending on the technology of the WSS, the frequency step is 6.25GHz or 12.5GHz (and could go reduced to 3.125GHz or possibly less in the near future). So, in a WDM environment with 50GHz channel spacing, the filter function may, for example, comprise a filter bandwidth of 62.5GHz , i.e., 50GHz + 12.5GHz. By using WSS, a flexible multiplexing system can be achieved which is adaptable to the required transmission requirements. For example, in a system having a large baudrate such as 48Gbaud, if a channel set of 4 consecutive optical channels is associated with an input of the WSS, the WSS may be programed to have a filter bandwidth of 206.25GHz or 212.5GHz, i.e., 4 x 50 GHz + 6.25GHz or 12.5 GHz.

According to embodiments, the first input of the first and/or second multiplexer(s) is/are coupled with an optical coupler for receiving multiple optical signals at a single input. Optionally the coupling of a multiplexer with an optical coupling may be via an optical amplifier. The optical coupler may comprise multiple inputs and may combine the optical signals received via said optical inputs and provide a single output signal comprising all spectral signal components of the received input signals, e.g. the adjacent WDM channels of a channel set. Said output signal may be provided to a single input of the multiplexer. Thereby the number or channels to be transmitted via the multiplexers can be increased. Preferably, there may an optical amplifier for amplifying the optical signal provided by the optical coupler. In addition or alternatively, there may be a set of optical amplifiers upstream before the optical coupler for amplifying the optical signals before combining said optical signals.

According to embodiments, the first multiplexer comprises at least a second input for receiving a further channel set, the further channel set being spaced from the first channel set provided at the first input of the first multiplexer by a spectral gap comprising a width of at least one channel spacing. In this case, at least a second filter unit may be provided in the first multiplexer to filter the signal received at its second input. In general, each input of a multiplexer may have an associated filter unit. Similarly, the second multiplexer may comprise at least a second input for receiving a further channel set, the further channel set being spaced from the first channel set provided at the first input of the second multiplexer by a spectral gap comprising a width of at least one channel spacing. Respective filter units for each multiplexer input may be provided. Thereby, the optical channels or sets of optical channels to be transmitted via a particular multiplexer are separated from each other in order to avoid a negative impact of overlapping of the filter function.

According to embodiments, the first and second multiplexers each comprise a plurality of inputs. Consecutive channel sets respectively comprising a group of successive channel signals may be alternately coupled with consecutive inputs of the first and second multiplexer. In case of only one signal/channel per channel set, consecutive channels may be alternately coupled with consecutive inputs of the first and second multiplexer. According to a specific embodiment, optical channels comprising an odd channel number may be transmitted via the first multiplexer and optical channels comprising an even channel number may be transmitted via the second multiplexer. Thereby, a spectral distribution of optical channels across multiple optical multiplexers is obtained. In an extension, more than 2 multiplexers can be used and adjacent optical channels are distributed across the multiplexers.

According to embodiments, the first filter function for filtering the optical signal at the first input of the first multiplexer comprises a filter bandwidth larger than the total signal bandwidth of the first optical channel set. The second filter function for filtering the optical signal at the first input of the second multiplexer may comprise a filter bandwidth larger than the total signal bandwidth of the second optical channel set. "Total signal bandwidth" refers to the target signal or information signal of a channel set without any side peaks or noise which have much lower energy than the information signal (e.g. more than 20dB lower). By using a filter function broader than the total signal bandwidth, a cut-off of the side slopes or edges of the spectrum of the optical channel signals can be avoided.

According to a further aspect, an optical transmission system is provided. The optical transmission system comprises at least two optical transmitters to generate optical WDM signals to be arranged in adjacent optical channels of an optical channel grid and an optical multiplexing system described above. An output of a first optical transmitter is coupled with the first input of the first multiplexer and an output of a second optical transmitter is coupled with the first input of the second optical multiplexer. Said first optical transmitter may provide optical signals according to a first optical channel set comprising one or more optical channels and said second optical transmitter may provide optical signals according to a second optical channel set comprising one or more optical channels, wherein adjacent optical channels are at least partially transmitted via different optical multiplexers.

According to a further aspect, an optical demultiplexing system is provided, which in general mirrors the multiplexing system described above. The optical demultiplexing system comprises an optical splitter for splitting an optical wavelength multiplexed signal received from an optical transmission path into at least two signal portions. The optical wavelength multiplexed signal comprises a plurality of optical signals corresponding to optical channels of an optical channel grid. Furthermore, the optical demultiplexing system comprises a first demultiplexer comprising an input connected to a first output of the optical splitter for receiving a first signal portion, and a second demultiplexer comprising an input connected to a second output of the optical splitter for receiving a second signal portion. The first demultiplexer comprises a first filter unit having a first filter function for filtering the optical signals received at its input in order to provide a first optical channel set comprising one or more optical channels at a first output of the first demultiplexer. Similarly, the second demultiplexer comprises a second filter unit having a second filter function for filtering the optical signals received at its input in order to provide a second optical channel set comprising one or more optical channels at a first output of the second demultiplexer. The filter units of the respective optical demultiplexer are configured such that the bandwidths of the first and second filter functions overlap. In addition, the optical channels are distributed across the optical demultiplexers such that one channel of the first optical channel set and one channel of the second optical channel set are adjacent channels of the optical channel grid. By using said filter bandwidth overlapping and said optical channel distribution across multiple demultiplexers, a demultiplexing system with high bandwidth efficiency is obtained which preserves the edges of the spectra of the optical channel signals, even though the optical channels in the channel grid are densely packed without any gap in-between or with only a small gap between adjacent channels.

According to embodiments of the demultiplexing system, the filter units of the first and second demultiplexers are configured such that the 3dB-bandwidths of the first and second filter functions are larger than the sum of the bandwidths of the channels that are associated to the respective output of the demultiplexers. Further, for example, the 1dB-bandwidths or the 0.5dB-bandwidths of the first and second filter functions partially overlap.

According to embodiments of the demultiplexing system, the first and second demultiplexers each comprise a wavelength selective switch (WSS) with free programmable filtering for each output of the first and second demultiplexer. The WSS may be programmable according to a frequency pattern comprising discrete frequency steps. In other words, the filtering function provided on the optical signals to be output at the respective outputs of the WSS can be varied in discrete frequency steps. For example, depending on the technology of the WSS, the frequency step is 6.25GHz or 12.5GHz. So, in a WDM environment with 50GHz channel spacing, the filter function may, for example, comprise a filter bandwidth of 62.5GHz. By using WSS, a flexible demultiplexing system can be achieved which is adaptable to the required transmission requirements where a filter function associated with an output of the WSS is configured to pass a set of adjacent optical channels.

According to embodiments of the demultiplexing system, the first demultiplexer comprises at least a second output for providing a further channel set, the further channel set being spaced from the first channel set provided at the first output of the first demultiplexer by a spectral gap comprising a width of at least one channel spacing. In other words, at a first output port of the first demultiplexer, a channel set with several consecutive wavelengths is provided. At the second output port of the first demultiplexer, another channel set having consecutive wavelengths is provided. The channel sets are separated by a spectral gap of at least one wavelength that is processed by the second demultiplexer.

Similarly, the second demultiplexer may comprise at least a second output for providing a further channel set, the further channel set being spaced from the first channel set provided at the first output of the second demultiplexer by a spectral gap comprising a width of at least one channel spacing. In other words, the configuration of the multiplexer filter functions is such that no adjacent channels are provided at any two outputs of one multiplexer to avoid signal degradations from overlapping filter functions.

According to embodiments of the demultiplexing system, consecutive channels or consecutive channel sets (respectively comprising a group of successive channels) are alternately provided at the outputs of the first and second demultiplexer. According to a specific embodiment, optical channels comprising an odd channel number may be transmitted via the first demultiplexer and optical channels comprising an even channel number may be transmitted via the second demultiplexer. Thereby, a spectral distribution of optical channels across the optical demultiplexers is obtained.

According to embodiments of the demultiplexing system, the first filter function for filtering the one or more optical signals at the input of the first demultiplexer comprises a filter bandwidth larger than the total signal bandwidth of the first optical channel set. The second filter function for filtering the one or more optical signals at the input of the second demultiplexer may comprise a filter bandwidth larger than the total signal bandwidth of the second optical channel set. Similarly to the multiplexing system described above, "total signal bandwidth" refers to the target signal or information signal without any side peaks or noise which have much lower energy than the target or information signal (e.g. more than 20dB lower). By using a filter function broader than the total signal bandwidth, a cut-off of the side slopes or edges of the spectrum of the optical channel signals can be avoided.

According to a further aspect, an optical receiving system is provided. The optical receiving system comprises an optical demultiplexing system as described before and at least two coherent receivers for receiving the filtered optical signals from the outputs of the first and second demultiplexer. Coherent receivers allow a good channel selection so that a coherent receiver can be coupled to a demultiplexer output carrying a set of channels, and the coherent receiver can selectively receive the optical signal of one designated channel. In order to couple multiple receivers to a demultiplexer output (one receiver for each channel of the associated channel set), an optical coupler/splitter may be interposed between demultiplexer and the receivers.

The above described aspects and embodiments may also be implemented as a method for multiplexing optical channels of a WDM channel grid, or demultiplexing optical channels of the WDM channel grid. The multiplexing is based on assigning adjacent optical channels (i.e. channels that are next to each other in terms of frequency or wavelength) to inputs of different multiplexers. The filter functions of these inputs of the different multiplexers have a 3dB-bandwidth that is slightly broader than the signal/channel bandwidths of the channels that are associated with an input to avoid any impairment on the optical signals, and at the same time allow an arrangement of the optical channel in the optical grid without much gap or spacing between the channels. Further, the filter functions of these inputs of the different multiplexers may overlap. The output signals of the different multiplexers may then be combined by optical couplers. This allows multiplexing of a large number of channels with an optical coupler of limited size (e.g. 1-by-4 or 1-by-8 coupler) and a limited number of ports on the WSS. For example, if two WSS with 20 input ports each and a 1-by-4 optical coupler are used, as much as 2x20x4=160 channels can be multiplexed. The demultiplexing method in general mirrors the multiplexing method as the skilled person understands.

In embodiments, the first and second filter functions overlap within the frequency range of their respective 1dB-bandwidths or 0.5dB-bandwidths.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

The invention is explained below in an exemplary manner with reference to the accompanying drawings, wherein

Fig. 1    illustrates an example schematic representation of an optical multiplexer for combining multiple WDM channels;

Fig. 2    illustrates an example diagram showing the signal power vs. wavelength for multiple WDM channels using a multiplexer according to Fig. 1;

Fig. 3    illustrates an example schematic representation of an optical coupler for combining multiple WDM channels;

Fig. 4    illustrates an example diagram showing the signal power vs. wavelength for multiple WDM channels using an optical coupler according to Fig. 3;

Fig. 5    illustrates an example schematic representation of an optical transmission system according to an embodiment comprising multiple multiplexers for combining multiple WDM channels and multiple demultiplexers for separating said WDM channels;

Fig. 6    illustrates an example diagram showing the signal power vs. wavelength for multiple WDM channels being transmitted via a common fiber of the optical transmission system according to Fig. 5;

Fig. 7    illustrates an example distribution of multiple WDM channels to multiple optical multiplexers of an optical transmission system according to Fig. 5;

Fig. 8    illustrates an exemplary grouping of multiple optical channels to different ports of wavelength selective switches of an optical transmission system according to an embodiment;

Fig. 9    illustrates an example distribution of multiple groups of WDM channels to multiple optical multiplexers of an optical transmission system according to Fig. 8;

Fig. 10   illustrates schematically the distribution of channel signals and noise at the output of an optical coupler; and

Fig. 11   illustrates schematically an example optical filter for use in a multiplexer or demultiplexer of an optical transmission system.

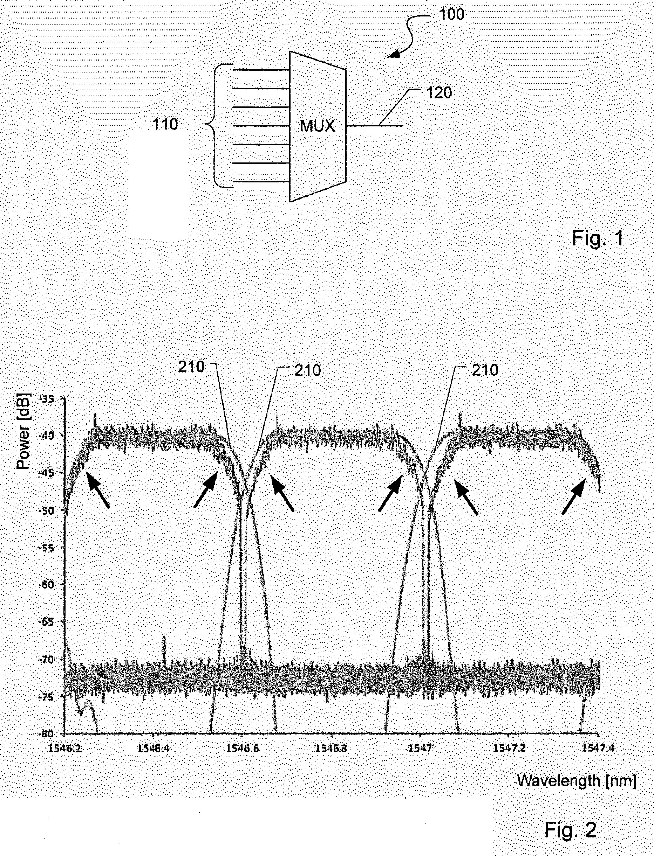

Fig. 1 shows a schematic structure of an optical multiplexer 100. The optical multiplexer 100 comprises multiple optical inputs 110 for receiving optical input signals. Said optical input signals may be associated with optical channels of an optical WDM system. For example said optical channels may be arranged next to each other according to a fixed or flexible channel grid. The optical multiplexer 100 further comprises an optical output 120. The optical multiplexer 100 is adapted to receive the optical input signals provided at the optical inputs 110, combine said optical input signals into a single optical output signal and output said optical output signal at the optical output 120, wherein the optical output signal comprises spectral components of all optical input signals.

As shown in Fig. 2, the optical multiplexer 100 may be adapted to filter the optical input signals. Specifically, the optical multiplexer 100 may comprise one or more optical filter units. The one or more optical filter units may implement one or more optical filter functions 210. Said one or more optical filter units may be used to filter the optical input signals according to the respective optical filter function 210 in order to filter out side bands of the optical signals. Specifically in high efficient channel grids, the bandwidth of the optical channels, respectively, the bandwidth of the optical signals associated with the optical channels are very close to the channel spacing, i.e. there is no or nearly no gap between adjacent channels. In other words, the symbol rate is very close to the channel spacing (e.g. 48Gbaud for 50GHz spacing or 32Gbaud for 33.3GHz spacing). If RZ (return-to-zero) pulse shaping is applied, the spectrum width is relatively large and a narrow optical filtering is not inducing a significant penalty. But once the channel spacing is narrower that the symbol rate, penalties are induced.

In order to avoid interference of channels, the optical filter functions associated with the respective optical channels in prior art systems comprise 3dB-bandwidths which are usually equal or slightly smaller than the channel spacing. Therefore, the side portions of the spectra of optical channels are attenuated (as indicated by arrows in Fig. 2), i.e. the optical channels are distorted which reduces the system performance significantly.

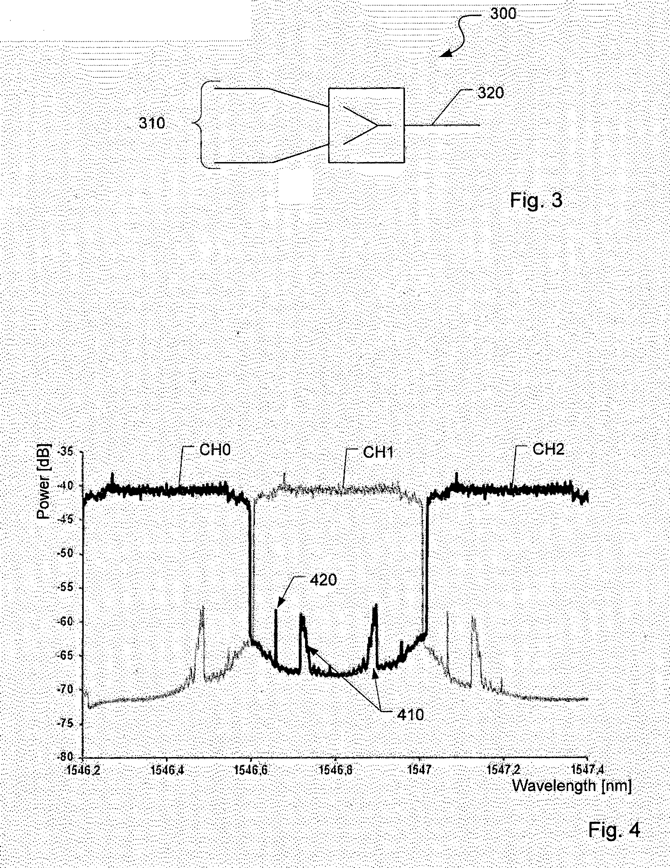

Fig. 3 shows a possibility of combining optical input signals using an optical coupler 300. The optical coupler 300 comprises two or more optical inputs 310 for receiving optical input signals. Said optical input signals may be associated with optical channels of an optical WDM system. The optical coupler 300 further comprises an optical output 320. The optical coupler 300 is adapted to receive the optical input signals provided at the optical inputs 310, combine said optical input signals without filtering into a single optical output signal and output said optical output signal at the optical output 320, wherein the optical output signal comprises all optical input signals. Typically, optical couplers 300 comprise a significant optical attenuation (typically ≈ 3dB). When combining multiple optical channels, a plurality of optical couplers 300 may be cascaded. By cascading multiple optical couplers 300, the attenuation of the coupling arrangement may rise. For example, said attenuation may be 20dB for coupling 100 optical channels.

A further disadvantage of using a plurality of optical couplers for combining a plurality of channels without any filtering is the increase of noise due to summing up amplified spontaneous emission (ASE) noise provided at the optical inputs 310 of the optical coupler 300. Said ASE may be caused by an optical amplifier coupled with the optical input 310 of the optical coupler 300. For example, the optical signal to noise ratio (OSNR) provided at each optical input 310 of the optical coupler 300 may be 40dB. When combining two optical signals comprising an OSNR of 40dB, the resulting OSNR at the optical output 320 of the optical coupler 300 may be 37dB. So, when combining a plurality of optical channels using a cascade of optical couplers 300, the resulting OSNR may be reduced significantly and performance of the optical transmission system is decreased. As a result, the number of cascaded couplers, respectively, the number of optical channels to be connected to an optical input 320 of an optical coupler 300 has to be limited in order to obtain an acceptable OSNR.

As can be seen in Fig. 4, a further disadvantage of using optical couplers 300 without any filtering of input signals are signal peaks 410, 420 within the channel bandwidth of a first optical channel CH1 caused by crosstalk from adjacent channels CH0, CH2. The signal peaks may be caused, e.g., by imperfections of digital-to-analog converters for generating the optical signals coupled with the optical inputs 310 of the optical coupler 300. Said imperfections may be caused by aliasing effects (peaks 420) or by imperfect interleaving of the different subDACs of a high speed DAC (peaks 410). Both effects can be reduced so that the impact is low if DAC sampling speed is increased compared to baudrate, and/or if the DAC quality is improved (better interleaving of subDAC, and thus better ENOB -effective number of bit- of the DAC).

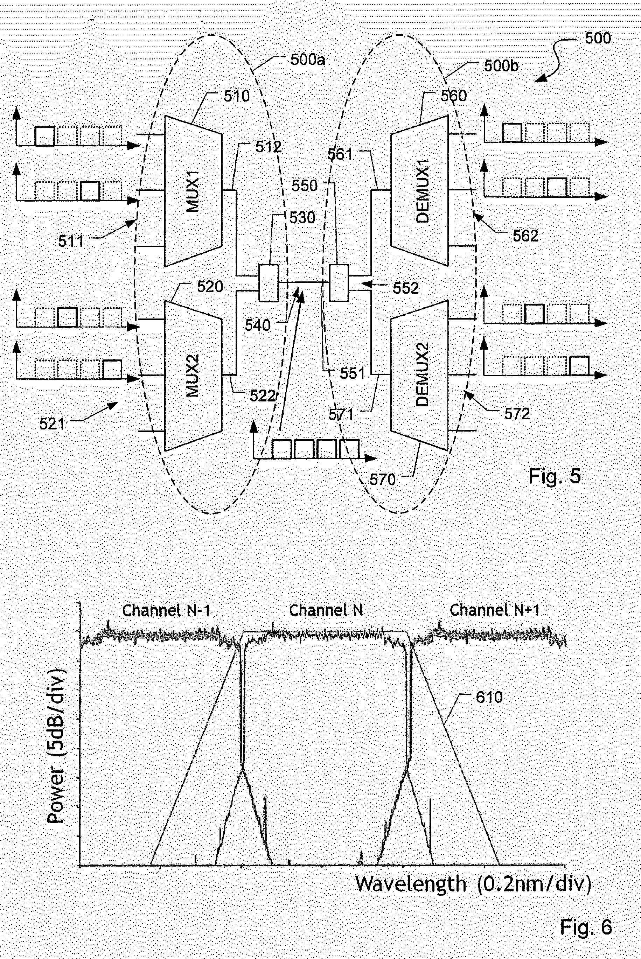

Fig. 5 shows an optical transmission system 500 according to an embodiment. The system comprises at least two optical multiplexer, in the present example a first and a second multiplexer 510, 520. Each multiplexer 510, 520 may comprise multiple optical inputs 511, 521 for receiving optical input signals. Said optical input signals may be associated with optical channels of an optical WDM system. Each optical multiplexer 510, 520 may further comprise an optical output 512, 522. The optical multiplexers 510, 520 may be adapted to receive the optical input signals provided at the optical inputs 511, 521, filter and combine said optical input signals into a single optical output signal and output said optical output signal at the optical output 512, 522. The respective optical output signal comprises signal components of all optical input signals provided at the respective optical multiplexer 510, 520.

The optical outputs 512, 522 of the optical multiplexers 510, 520 are coupled using an optical coupler 530. Specifically, the optical coupler 530 may comprise at least two optical inputs 531 for receiving the output signals provided at the optical outputs 512, 522 of the optical multiplexers 510, 520 and may comprise an optical output 532 for providing an optical output signal containing the signal components of the optical signals provided at the optical inputs 531. The optical multiplexers 510, 520 and the optical coupler 530 form an optical multiplexing system 500a. In case of more than 2 multiplexers, the 1:2 coupler 530 may be replaced by a larger coupler (1:3; 1:4; ...).

The optical output 532 of the optical coupler 530 may be connected to an optical transmission path 540, specifically an optical fiber for transmitting the optical signals to a corresponding optical demultiplexing system 500b.

The optical demultiplexing system 500b comprises at least an optical splitter 550 and two or more optical demultiplexer 560, 570. The optical demultiplexing system 500b is adapted to separate the plurality of optical channels transmitted via the optical transmission path and provide a subset of said optical channels or a single optical channel at an output of the optical demultiplexing system 500b. In detail, the optical splitter 550 of the optical demultiplexing system 500b comprises an optical input 551coupled with the optical transmission path 540. Thereby, the optical splitter 550 receives optical input signals associated with a plurality of optical channels. The optical splitter 550 is adapted to split the optical signal(s) into two or more signal portions, wherein each signal portion is provided at one of the optical outputs 552 of the optical splitter 550. In particular, each signal portion comprises the whole optical spectrum, i.e. comprises all optical wavelength transmitted via the optical transmission path 540. For example, the optical splitter 550 may comprise an optical power divider wherein the optical signal provided at the optical input 551 is equally distributed across the optical outputs 552. In case of more than 2 demultiplexers, the 1:2 splitter 550 may be replaced by a larger splitter (1:3; 1:4; ...).

Each optical output 552 of the optical splitter 550 may be coupled with the optical input 561, 571 of an optical demultiplexer 560, 570. The optical demultiplexers 560, 570 may be adapted to receive the optical input signals associated with a plurality of optical channels, separate (by filtering) said optical channels into single optical channel signals or optical signals comprising a subset of optical channels, and output said single optical channels or said subsets of optical channels at the output 562, 572 of the optical demultiplexer 560, 570. In particular, adjacent optical channels or adjacent optical channel sets are demultiplexed alternately at different optical demultiplexer 560, 570, i.e. a first optical channel/first set of optical channels is demultiplexed at a first optical demultiplexer 560, wherein the second optical channel/second set of optical channels adjacent to the first optical channel/first set of optical channels is demultiplexed at a second optical demultiplexer 570. The filter functions provided by the optical demultiplexer 560, 570 for filtering the adjacent optical channel / sets of optical channels may overlap. In other words, the filter bandwidth of the filter function provided by the optical demultiplexer 560, 570 is larger than the bandwidth of the optical channel, respectively, larger than the total bandwidth of the set of optical channels to be filtered by said filter function. Thereby, the edges of the optical channel signals are preserved and not degraded by filtering.

The optical multiplexer 510, 520 and the optical demultiplexer 560, 570 comprise optical filter units in order to provide a filtering function to the optical input signals. Thereby, the optical multiplexers 510, 520 are able to filter the optical input signals in order to attenuate optical signal portions outside the one or more optical channels assigned to an input and to be transmitted. Turning to the optical demultiplexers 560, 570, an optical filter unit is configured to filter out one or more optical channels of the plurality of channels received at the input 561, 571 of the optical demultiplexers 560, 570 and provide said filtered optical channel/channels at the output 562, 572.

The optical multiplexers 510, 520 and/or the optical demultiplexers 560, 570 may be implemented by wavelength-selective switches (WSS). WSS are used in Wavelength-division multiplexing optical communications networks to route or switch signals between optical fibers according to their wavelength. Specifically, the various incoming channels of a common port are dispersed continuously onto a switching element which then directs and attenuates each of these channels independently to the N switch ports.

Furthermore, the WSS may comprise a free programmable filter unit for filtering the single channels and or a set of channels in order to filter the optical signal provided at an optical input 511, 521 and provide a filtered optical signal with a specific bandwidth at the optical outputs 512, 522 of the WSS. For example, the WSS may be programmable according to a certain frequency or wavelength grid, e.g. a 12.5 GHz grid (12.5 GHz, 25GHz, 37.5 GHz etc.) or a 6.25 GHz grid (6.25 GHz, 12.5GHz, 18.75 GHz etc.).

In order to achieve optimized bandwidth efficiency without significant channel distortions, adjacent optical channels or sets of adjacent optical channels to be transmitted via the optical transmission system 500 are alternately distributed among the optical multiplexers 510, 520 of the optical multiplexing system 500a. More specifically, a plurality of optical transmitters may be coupled with the optical inputs 511, 521 of the optical multiplexing system 500a. The optical transmitters may provide optical signals to be arranged in subsequent optical channels of an optical channel grid. The bandwidth of the optical signal to be transmitted in one of said optical channels may be equal or slightly smaller than the channel spacing of two adjacent channels. In order to obtain an optimized channel spacing of the channels to be handled by the respective multiplexers 510, 520, optical transmitters providing optical signals according to an odd channel number (CH1, CH3, CH5, ...) are coupled to consecutive inputs of a first optical multiplexer 510 (e.g. input 1, 2, 3, ...), whereas the optical transmitters providing optical signals according to an even channel number (CH2, CH4, CH5, ...) are coupled to consecutive inputs of a second optical multiplexer 520 (e.g. input 1, 2, 3, ...). Thereby, the optical channels provided at the inputs 511, 521 of the optical multiplexer 510, 520 can be separated from one another by a gap which is not occupied by an optical signal. Thus, it is possible to use optical filter units comprising filter functions with a filter bandwidth larger than the channel spacing leading to an undistorted optical signal associated to the respective optical channel. For example, the channel spacing may be 50GHz and the bandwidth of the optical signal comprised within a single channel may be 50 GHz or slightly smaller, wherein the filter bandwidth is 50GHz +6.25GHz or 50GHz +12.5GHz, generally 50GHz + $\Delta$f, wherein the value of $\Delta$f= N*$f_{grid}$, N being a natural number and $f_{grid}$ being the frequency grid of the WSS which is dependent on the technology of the WSS.

Fig. 6 shows the optical channel power vs. the wavelength of three adjacent optical channels CH N-1, CH N, CH N+1, wherein, for example, the channels CH N-1 and CH N+1 may be transmitted via the first multiplexer 510 and the channel CH N may be transmitted via the second multiplexer 520. The channels comprise a rectangular -shaped or essentially rectangular -shaped spectrum. In addition Fig. 6 shows the filter function 610 associated to channel CH N. Said filter function 610 is provided by the optical multiplexer 520 which handles channel CH N. The filter function 610 comprises a filter bandwidth wider than the channel bandwidth of the channel CH N. The filter bandwidth may be, for example, measured between the points of the filter curve at which the filter curve is 3dB, 1dB or 0.5dB lower than the maximum value of the filter curve, i.e. the filter bandwidth is the 3dB, 1dB or 0.5dB filter bandwidth. Using a filter bandwidth larger than the channel bandwidth is advantageous because the side portions of the optical channel are not or essentially not distorted by filtering of the channel leading to a higher system performance. By upper-mentioned channel distribution among the at least two multiplexers 510, 520, negative impacts of using optical filters with an filter bandwidth even larger than the channel spacing has no negative impact on adjacent optical channels because said optical channels are transmitted via the further optical multiplexer.

Please note that in the proposed configuration of filter functions, as shown for example in Fig. 6, the filter functions of adjacent filters cross (overlap) at 0dB 0.5dB, or 1 dB attenuation to avoid filtering of the optical channels.

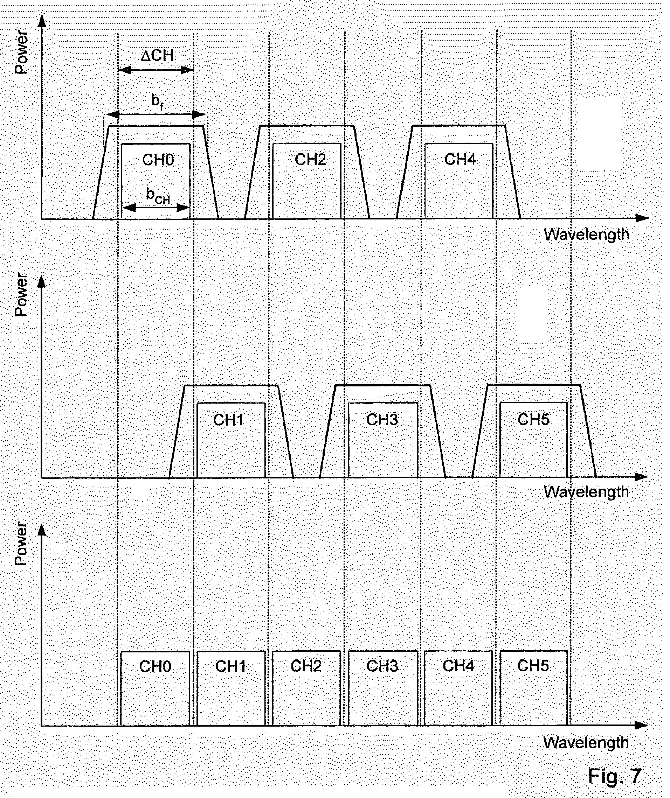

Fig. 7 shows different schematic spectral channel diagrams, wherein the channel power is plotted against the wavelength. The upper spectral channel diagram shows the spectra of the even optical channels CH0, CH2 and CH4 and the respective filter functions implemented by the first optical multiplexer 510 handling said even optical channels. The dotted lines indicate the channel spacing according to the channel grid of the WDM system. The channel bandwidth $b_{ch}$ is equal or slightly smaller than the channel spacing $\Delta$CH. In addition, the filter bandwidth $b_f$ of the optical filter function used for filtering the respective channels CH0, CH2, CH4 is larger than the channel spacing $\Delta$CH. For example in a system with a 50 GHz channel grid, the 3dB-bandwidth of the optical filter may be at least 10 GHz (e.g. 12.5 GHz) wider than the channel width or channel spacing. In addition, Fig. 7 shows that there is a free gap between two successive channels CH0, CH2 handled by the first optical multiplexer 510. Thereby, the filter function being broader than the chan-

nel spacing $\Delta$CH has no negative impact on adjacent channels.

The middle spectral channel diagram of Fig. 7 shows the spectra of the odd optical channels CH1, CH 3and CH5 and the respective filter functions implemented by the second optical multiplexer 520 handling said odd optical channels. Similar to the upper spectral channel diagram, the channel bandwidth $b_{ch}$ is equal or slightly smaller than the channel spacing $\Delta$CH. In addition, the filter bandwidth $b_f$ of the optical filter function used for filtering the respective channels CH1, CH3, CH5 is larger than the channel spacing $\Delta$CH. So, the second optical multiplexer 520 handles every second optical channel, which leads again to gaps between two successive channels, e.g. CH1, CH3 handled by the second optical multiplexer 520 thereby avoiding optical filtering of direct adjacent channels due to the filter function broader then the channel spacing $\Delta$CH.

The last spectral channel diagram of Fig. 7 shows the result of combining the odd and even channels shown in the upper and middle spectral channel diagram. Said combining may be performed by the optical coupler 530. When combining the outputs of the first and second multiplexer 510, 520, the gaps between two channels handled by the first multiplexer 510 are filled by channels handled by the second optical multiplexer 520. As a result, a plurality of square- or rectangular- shaped channels comprising a channel bandwidth $b_{ch}$ equal or slightly smaller than the channel spacing $\Delta$CH are transmitted next to each other, wherein there are no channel distortions at the side portions of the respective channels due to a decreasing of the filter curve.

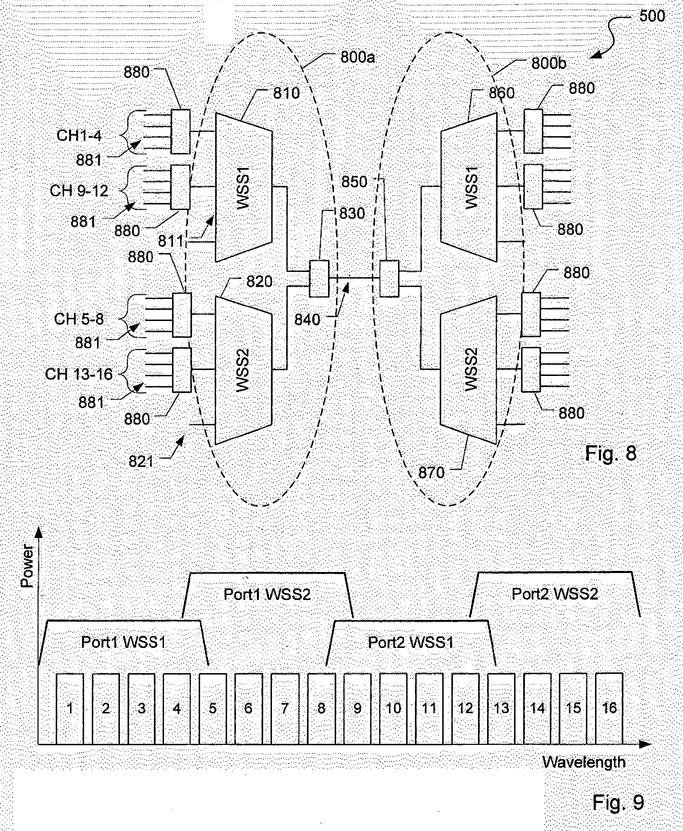

Fig. 8 shows a further embodiment of an optical transmission system 800. The basic structure of the optical transmission system 800 corresponds to the structure of the optical transmission system 500 shown in Fig. 5. Therefore, only the differences of the optical transmission system 800 with respect to the optical transmission system 500 are explained. Otherwise, the description of the optical transmission system 500 shall apply accordingly.

In general, the optical transmission system 800 comprises an optical multiplexing system 800a and an optical demultiplexing system 800b coupled by an optical transmission path 840. The optical multiplexing system 800a comprises multiple optical multiplexer, each optical multiplexer implemented by a WSS 810, 820. In addition, the optical multiplexing system 800a comprises at least one optical coupler 830 for receiving the optical output signals of the WSS 810, 820 and combining said optical signals for transmission via the optical transmission path 840. In case of more than 2 multiplexers, the 1:2 coupler 830 may be replaced by a larger coupler (1:3; 1:4; ...).

The optical demultiplexing system 800b comprises an optical splitter 850 and two or more optical demultiplexer, each optical demultiplexer implemented by a WSS 860, 870. The optical signals transmitted via the optical transmission path 840 are splitted by means of the optical splitter 850 in at least two signal portions, each signal portion to be provided to an input of one of the WSS 860, 870. In case of more than 2 demultiplexers, the 1:2 splitter 550 may be replaced by a larger splitter (1:3; 1:4; ...). The WSS 860, 870 are adapted to demultiplex single optical channels or groups of optical channels in order to provide said demultiplexed optical channels to the output of the WSS 860, 870. The outputs of the WSS 860, 870 may be coupled with optical receivers, in particular coherent optical receivers for converting the optical signals into the electrical domain. Similar to the multiplexing part, 1:4 optical couplers/splitters (similar to the ones of the multiplexing part) may be added at the outputs of WSS1 and WSS2. This allows coupling with the optical receivers associated with the respective wavelengths of the optical channels.

Typically, the number of inputs 811, 821 of the WSS 810, 820 is limited because of the disproportional increase of complexity of the WSS with increasing number of inputs. Typical flexgrid WSS have a limited number of ports, e.g. 20 ports. In order to enable transmission of a number of channels higher than the number of inputs 811, 821 of the WSS 810, 820, at least one input 811, 821 may be coupled with an optical coupler 880. Said optical coupler 880 may comprise a plurality of optical inputs 881, each input e.g. to be coupled with an optical transmitter for receiving on optical signal according to an optical channel of an optical channel grid. Thereby, a number of optical signals associated with different optical channels are combined and provided to a single optical input 810.

Specifically, said optical channels combined by each optical coupler 880 may be adjacent channels of an optical channel grid. In order to limit the increase of noise, specifically ASE-noise, only a limited number of channels are combined, typically less than 10, e.g. 2, 3, 4, 5 or 6. Further, the number of channels associated with different WSS inputs may vary and not be the same.

As mentioned above, the disadvantage of using optical couplers and having multiple channels associated with one multiplexer input are signal peaks within the channel bandwidth of one optical channel caused by adjacent channels (see Fig. 4). The signal peaks may be caused, e.g., by imperfections of digital-to-analog converters for generating the optical signals coupled with the optical inputs 881 of optical coupler 880, for example. The signal peaks may be caused by aliasing effects or by imperfect interleaving of subDACs of a high speed DAC. However, these effects can be reduced so that the impact is low if DAC sampling speed is increased compared to baudrate, or if the quality of the DAC is improved (e.g. better interleaving of subDACs, and thus better ENOB -effective number of bit- of the DAC).

As mentioned above, the WSS 810, 820 comprise a programmable filter unit for applying a filtering function on the optical channel to be transmitted via the WSS 810, 820. As shown in Fig. 9, the filtering function of each input 811, 821 of WSS 810, 820 may be adapted to the number of optical channels, i.e. at the bandwidth of the set of channels received at each input. More specifically, the filter bandwidth of the filter function applied to the optical signal received at a particular optical input 811, 821 (also called port) may be larger than the summed bandwidth of all channels of the set of channels. In other words, the filter function applied to adjacent optical channel sets may overlap. Thereby, the side slopes of the optical signals at the outer channels of a channel set are not cut off.

In order to enable upper-mentioned overlapping of the filter function, adjacent optical channel sets are alternately distributed across different WSS 810, 820. As shown in Fig. 8 and 9, a first channel set and a third channel set, e.g. comprising channels 1-4, and channels 9 - 12, are transmitted via the first WSS 810, wherein a second channel set and a fourth channel set, e.g. comprising channels 5-8, and channels 13 - 16, are transmitted via the second WSS 820. Said channel set distribution is advantageous, because the filter bandwidth of the filter functions for filtering the channel sets can be broader than the bandwidth of the set of channels to be transmitted, wherein the filter functions provided by each WSS do not overlap.

The filter bandwidth $f_b$ of the filter functions of the WSS 810, 820 may be defined by the following formula:

$$f_b = N * \Delta\mathrm{CH} + \Delta f$$

wherein: N is a natural number;
$\Delta$CH is the channel spacing, and
$\Delta$f is the bandwidth overlap (according to the frequency grid of the WSS).

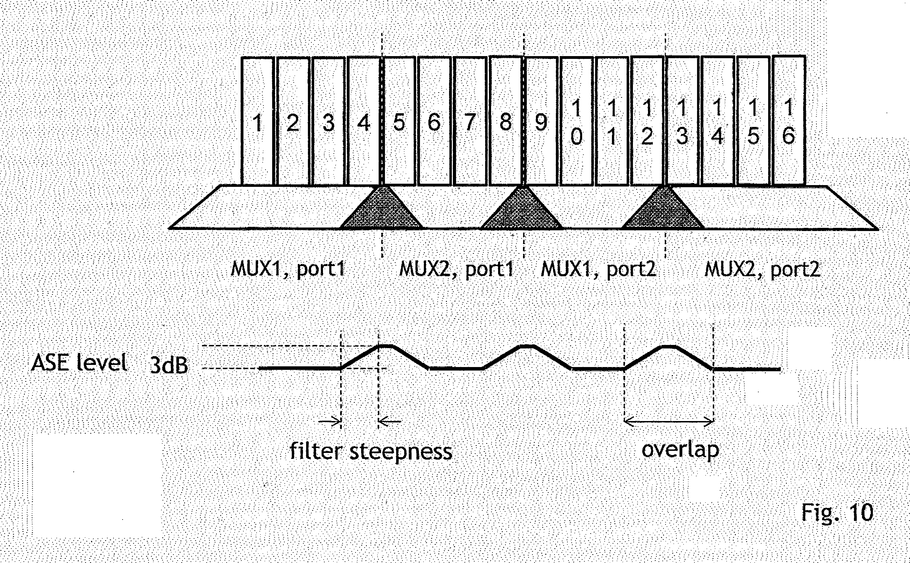

As mentioned above, the filter bandwidth of the filter functions should be larger than the total bandwidth of the N associated channels (or N times the channel spacing) to avoid cutting off the spectrum of optical channels by filtering in the (de)multiplexer or WSS. On the other hand, the filter bandwidth should not extend unnecessary beyond the channel bandwidths to avoid that noise (e.g. from ASE) from outside the channels is included for transmission via the optical transmission path 840, thereby reducing OSNR. This will be explained in more detail with reference to Fig. 10 below.

At the demultiplexing system 800b, the situation is reversed. The optical signals transmitted via the optical transmission path 840 are splitted by means of the optical splitter 850 in at least two signal portions. Each signal portion comprises the whole wavelength spectrum, i.e. all optical channels transmitted via the optical transmission path 840. The WSS 860, 870 are adapted to demultiplex single optical channels or groups of optical channels out of the signal portions for providing demultiplexed optical channels or groups of optical channels at the output of the WSS 860, 870. In particular, the adjacent optical channels or adjacent optical channel sets are demultiplexed alternately at different WSS 860, 870, i.e. a first optical channel/first set of optical channels is demultiplexed at a first WSS 860, wherein the second optical channel/second set of optical channels adjacent to the first optical channel/first set of optical channels is demultiplexed at a second WSS 870. The filter functions provided by the WSS 860, 870 for filtering the adjacent optical channel / sets of optical channels may overlap, as indicated in Fig. 9. In other words, the filter bandwidth of the filter function provided by the WSS 860, 870 is larger than the bandwidth of the optical channel / the set of optical channels to be filtered by said filter function.

In embodiments where sets of channels are assigned to multiplexer ports, a set of channels is provided at each output of a demultiplexer. An optical coupler may be used to split the signals at a demultiplexer output port and provide the respective split signal portions to a corresponding number of coherent receivers. Each coherent receiver can select a single channel and reject the others by using appropriate signal processing. It is however preferred to provide not all channels to each receiver but use the filter functions in the demultiplexers to make a selection, in order to avoid quality impairments (penalties) when a large number of channels is supplied to a receiver, and to avoid difficulties to correctly manage signal power and to have enough power per channel. For example, if a 1-by-4 coupler is used, a channel set with 4 channels is output at each demultiplexer output port, plus a small part of the left channel and a small part of the right channel to the channel set. At each port of the subsequent optical coupler, the same spectrum (4 channels + 2 small parts) is provided. The coherent receiver coupled with a coupler port can select a single channel and reject the (three) others. As mentioned, it is preferable to supply only a few channels to a coherent receiver, and not the full 80 or 160 channels that are transmitted via the optical transmission path.

Fig. 10 illustrates schematically the distribution of signals and noise at the output of the optical coupler 830. The figure shows channels 1-16 transmitted by the input ports of MUX1 and MUX2 (WSS1 and WSS2). In the depicted example, each port receives and transmits 4 optical channels. Fig. 10 further illustrates schematically the filter functions associated with the input ports of the multiplexers. The overlap of adjacent filter functions is shaded. As already mentioned, the filters not only pass optical channel signals in their passbands but also noise such as caused by ASE. In the areas where the filter functions overlap, the noise adds up, as shown in the lower part of the figure, resulting in a 3dB noise increase in the overlap areas, which may impact the channels at the borders of the filter functions. Fig. 10 further marks the slope of the noise bumps and its steepness. In a system with a channel width from 30 to 50GHz, for example, optical filters with a steepness of ~ 5GHz from 1dB to 20dB attenuation may be used. The steepness is a property of an optical filter and is defined by a difference in bandwidths of a filter function at different attenuation levels. Please note that the dimensions shown in Fig. 10 are not to scale and are depicted only schematically.

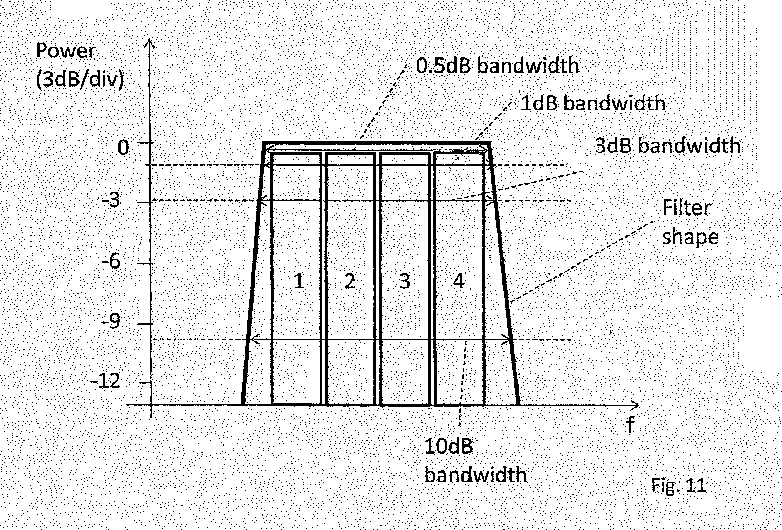

Fig. 11 illustrates schematically an example optical filter for use in a multiplexer or demultiplexer of an optical transmission system according to embodiments. Fig. 10 illustrates the spectral filter shape for the case where 4 optical channels are assigned to one (de)multiplexer input. The figure shows different bandwidths of the filter function, namely the 0.5dB-bandwidth where the power of a filtered signal is attenuated by 0.5dB, the 1dB-bandwidth where the power of a filtered signal is attenuated by 1dB, etc.

Assuming a 50GHz spacing and 4 channels per multiplexer channel, the following filter parameters may be used: a 0.5dB-bandwidth of 203GHz; a 1dB-bandwidth of 206GHz; a 3dB-bandwidth of 210GHz; a 10dB-bandwidth of 213GHz; and a 20dB-bandwidth of 216GHz. In this case, the "steepness" of the filter between 1dB and 20dB would be 5GHz on each side (i.e. 10GHz in total corresponding to the difference between the above 20dB-bandwidth and the 1dB-bandwidth: 216-206GHz).

Furthermore, a small overlap (4GHz for example) of the filter functions at 0dB or 1 dB attenuation may be employed to ensure no filtering of the channels even taking into account some uncertainties in the filters. In this case, at 20dB attenuation, the overlap is 4GHz+2x5GHz=14GHz. The choice of the "overlap at 1 dB" may be linked to the accuracy of the filter position. If there is an accuracy of +/-2GHz for each filter, the overlap at 1 dB should be 4GHz. The "overlap at 20dB" is then equal to the "overlap at 1 dB + twice the steepness" (if the steepness is defined as the difference of frequency between 1 dB attenuation and 20dB attenuation as mentioned above).

It should be noted that the description and drawings merely illustrate the principles of the proposed methods and systems. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

**Claims**

1.  Optical multiplexing system (500a) comprising:

    - a first multiplexer (510) comprising a first input (511) for receiving a first optical channel set comprising one or more optical channels of an optical channel grid;
    - a second multiplexer (520) comprising a first input (521) for receiving a second optical channel set comprising one or more optical channels of the optical channel grid; and
    - an optical coupler (530) providing no filtering function for transmitting the first and second channel sets via a common optical transmission path (540), inputs (531) of the optical coupler (530) coupled with the outputs (512, 522) of the first and second multiplexers (510, 520),

    wherein

    - one channel of the first optical channel set and one channel of the second optical channel set are adjacent channels of the optical channel grid;
    - the first multiplexer (510) comprises a first filter unit having a first filter function for filtering the optical signals of one or more optical channels received at the first input (511) of the first multiplexer (510);
    - the second multiplexer (520) comprises a second filter unit having a second filter function for filtering the optical signals of one or more optical channels received at the first input (521) of the second multiplexer (520); and

    - the bandwidths of the first and second filter functions partially overlap, namely, the bandwidths of the first and second filter functions start overlap at an attenuation lower than 3dB and overlap at attenuations 3dB and higher.

2.  The multiplexing system according to anyone of the preceding claims, wherein the first and second multiplexers (810, 820) each comprise a wavelength selective switch with free programmable filtering for each input of the first and second multiplexer (810, 820).

3.  The multiplexing system according to anyone of the preceding claims, wherein the first input of the first and/or second multiplexer(s) (510, 520, 810, 820) is/are coupled with an optical coupler (880), optionally via an optical amplifier, for receiving multiple optical signals at a single input.

4.  The multiplexing system according to anyone of the preceding claims, wherein the first multiplexer (510, 810) comprises at least a second input for receiving a further channel set, the further channel set being spaced from the first channel set provided at the first input of the first multiplexer (510, 810) by a spectral gap comprising a width of at least one channel spacing and/or the second multiplexer (520, 820) comprises at least a second input for receiving a further channel set, the further channel set being spaced from the first channel set provided at the first input of the second multiplexer (520, 820) by a spectral gap comprising a width of at least one channel spacing.

5.  The multiplexing system according to anyone of the preceding claims, wherein the first and second multiplexers (510, 520, 810, 820) each comprise a plurality of inputs, and wherein consecutive channels or consecutive channel sets respectively comprising a group of successive channel signals are alternately coupled with inputs of the first and second multiplexer (510, 520, 810, 820).

6.  The multiplexing system according to anyone of the preceding claims, wherein the first filter function for filtering the optical signal at the first input of the first multiplexer comprises a filter bandwidth larger than the total signal bandwidth of the first optical channel set and/or the second filter function for filtering the optical signal at the first input of the second multiplexer comprises a filter bandwidth larger than the total signal bandwidth of the second optical channel set.

7.  The multiplexing system according to anyone of the preceding claims, wherein the overlap of the bandwidths of the first and second filter functions is smaller than the channel spacing of the channel grid or smaller than ½ of the channel spacing.

8. Optical transmission system comprising at least two optical transmitters to generate optical signals to be arranged in adjacent optical channels of an optical channel grid; and the optical multiplexing system (500a) according to any of claims 1-8, wherein an output of a first optical transmitter is coupled with the first input of the first multiplexer (510, 810) and an output of a second optical transmitter is coupled with the first input of the second optical multiplexer (520, 820).

9. Optical demultiplexing system (500b) comprising:

   - an optical splitter (550) providing no filtering function for splitting an optical wavelength multiplex signal received from an optical transmission path (540) into at least two signal portions comprising the whole optical spectrum of the optical wavelength multiplex signal, the optical wavelength multiplex signal comprising a plurality of optical signals corresponding to optical channels of an optical channel grid;
   - a first demultiplexer (560) comprising an input (561) connected to an output of the optical splitter (550) for receiving a first signal portion; and
   - a second demultiplexer (570) comprising an input (571) connected to an output of the optical splitter (550) for receiving a second signal portion;

   wherein

   - the first demultiplexer (560) comprises a first filter unit having a first filter function for filtering the optical signals received at its input (561) in order to provide a first optical channel set comprising one or more optical channels at a first output of the first demultiplexer (560);
   - the second demultiplexer (570) comprises a second filter unit having a second filter function for filtering the optical signals received at its input (571) in order to provide a second optical channel set comprising one or more optical channels at a first output of the second demultiplexer (570),
   - the bandwidths of the first and second filter functions partially overlap, namely, the bandwidths of the first and second filter functions start overlap at an attenuation lower than 3dB and overlap at attenuations 3dB and higher, and
   - one channel of the first optical channel set and one channel of the second optical channel set are adjacent channels of the optical channel grid.

10. The demultiplexing system according to claim 9, wherein the first and second demultiplexers each comprise a wavelength selective switch (860, 870) with free programmable filtering for each output of the first and second demultiplexer (860, 870).

11. The demultiplexing system according to any of claims 9 to 10, wherein the first demultiplexer (560, 860) comprises at least a second output for providing a further channel set, the further channel set being spaced from the first channel set provided at the first output of the first demultiplexer (560, 860) by a spectral gap comprising a width of at least one channel spacing and/or the second demultiplexer (570, 870) comprises at least a second output for providing a further, channel set, the further channel set being spaced from the first channel set provided at the first output of the second demultiplexer (570, 870) by a spectral gap comprising a width of at least one channel spacing.

12. The demultiplexing system according to any of claims 9 to 11, wherein consecutive channels or consecutive channel sets respectively comprising a group of successive channels are alternately provided at outputs of the first and second demultiplexer (560, 570, 860, 870).

13. The demultiplexing system according to any of claims 9 to 12, wherein the first filter function for filtering the one or more optical signals at the input of the first demultiplexer (560, 860) comprises a filter bandwidth larger than the total signal bandwidth of the first optical channel set and/or the second filter function for filtering the one or more optical signals at the input of the second demultiplexer (570, 870) comprises a filter bandwidth larger than the total signal bandwidth of the second optical channel set.

14. Optical receiving system comprising:

   - an optical demultiplexing system (500b) according to any of claims 9 to 13; and
   - at least two coherent receivers for receiving the filtered optical signals from the outputs of the first and second demultiplexer (560, 570, 860, 870).

**Patentansprüche**

1. Optisches Multiplexsystem (500a), umfassend

   - einen ersten Multiplexer (510) umfassend einen ersten Eingang (511) zum Empfang einer ersten optischen Kanalgruppe umfassend einen oder mehrere optische Kanäle eines optischen Kanalnetzes;

- einen zweiten Multiplexer (520) umfassend einen ersten Eingang (521) zum Empfang einer zweiten optischen Kanalgruppe umfassend einen oder mehrere optische Kanäle des optischen Kanalnetzes; und

- einen Optokoppler (530) ohne Filterfunktion zur Übertragung der ersten und zweiten Kanalgruppe über einen gemeinsamen optischen Übertragungsweg (540), wobei die Eingänge (531) des Optokopplers (530) mit den Ausgängen (512, 522) des ersten und zweiten Multiplexers (510, 520) gekoppelt sind,

worin

- ein Kanal der ersten optischen Kanalgruppe und ein Kanal der zweiten optischen Kanalgruppe nebeneinanderliegende Kanäle des optischen Kanalnetzes sind,

- der erste Multiplexer (510) eine erste Filtereinheit umfasst, die eine erste Filterfunktion zur Filterung der optischen Signale eines oder mehrerer optischer Kanäle hat, die am ersten Eingang (511) des ersten Multiplexers (510) empfangen werden;

- der zweite Multiplexer (520) eine zweite Filtereinheit umfasst, die eine zweite Filterfunktion zur Filterung der optischen Signale eines oder mehrerer optischer Kanäle hat, die am ersten Eingang (521) des zweiten Multiplexers (520) empfangen werden; und

- sich die Bandbreiten der ersten und zweiten Filterfunktion teilweise überlappen, d.h., die Bandbreiten der ersten und zweiten Filterfunktion bei einer Dämpfung von unter 3 dB mit der Überlappung beginnen, und sich bei Dämpfungen von 3 dB oder höher überlappen.

2. Multiplexsystem nach einem beliebigen der vorhergehenden Ansprüche, worin der erste und zweite Multiplexer (810, 820) beide einen wellenlängenabhängigen Schalter mit frei programmierbarer Filterung für jeden Eingang des ersten und zweiten Multiplexers (810, 820) umfassen.

3. Multiplexsystem nach einem beliebigen der vorhergehenden Ansprüche, worin der erste Eingang des ersten und/oder zweiten Multiplexers (510, 520, 810, 820) mit einem Optokoppler (880) gekoppelt ist/sind, optional über einen optischen Verstärker zum Empfang von multiplen optischen Signalen an einem einzelnen Eingang.

4. Multiplexsystem nach einem beliebigen der vorhergehenden Ansprüche, worin der erste Multiplexer (510, 810) mindestens einen zweiten Eingang zum Empfang einer weiteren Kanalgruppe umfasst, wobei die weitere Kanalgruppe zu der ersten, am ersten Eingang des ersten Multiplexers (510, 810) eingehenden Kanalgruppe einen Abstand durch eine spektrale Lücke aufweist, die eine Breite von mindestens einem Kanalabstand umfasst, und/oder der zweite Multiplexer (520, 820) mindestens einen zweiten Eingang zum Empfang einer weiteren Kanalgruppe umfasst, wobei die weitere Kanalgruppe zu der ersten, am ersten Eingang des zweiten Multiplexers (520, 820) eingehenden Kanalgruppe einen Abstand durch eine spektrale Lücke aufweist, mit einer Breite von mindestens einem Kanalabstand.

5. Multiplexsystem nach einem beliebigen der vorhergehenden Ansprüche, worin der erste und der zweite Multiplexer (510, 520, 810, 820) jeder eine Mehrzahl von Eingängen umfassen und worin konsekutive Kanäle oder konsekutive Kanalgruppen, die jeweils eine Gruppe sukzessiver Kanalsignale umfassen, alternierend mit den Eingängen des ersten und zweiten Multiplexers (510, 520, 810, 820) gekoppelt sind.

6. Multiplexsystem nach einem beliebigen der vorhergehenden Ansprüche, worin die erste Filterfunktion zur Filterung des optischen Signals am ersten Eingang des ersten Multiplexers eine breitere Filterbandbreite als die gesamte Signalbandbreite der ersten optischen Kanalgruppe umfasst, und/oder die zweite Filterfunktion zur Filterung des optischen Signals am ersten Eingang des zweiten Multiplexers eine breitere Filterbandbreite als die gesamte Signalbandbreite der zweiten optischen Kanalgruppe umfasst.

7. Multiplexsystem nach einem beliebigen der vorhergehenden Ansprüche, worin die Überlappung der Bandbreiten der ersten und zweiten Filterfunktion schmaler als der Kanalabstand im Kanalnetz oder schmaler als ½ des Kanalabstands ist.

8. Optisches Übertragungssystem, umfassend mindestens zwei optische Transmitter zur Erzeugung von optischen Signalen, die in nebeneinanderliegenden optischen Kanälen eines optischen Kanalnetzes anzuordnen sind; und das optische Multiplexsystem (500a) nach einem beliebigen der Ansprüche 1-8, worin der Ausgang eines ersten optischen Transmitters mit dem ersten Eingang des ersten Multiplexers (510, 810) gekoppelt ist, und ein Ausgang eines zweiten optischen Transmitters mit dem ersten Eingang des zweiten optischen Multiplexers (520, 820) gekoppelt ist.

9. Optisches Demultiplexsystem (500b), umfassend

- einen optischen Splitter (550) ohne Filterfunktion zum Splitten eines von einem optischen Übertragungsweg empfangen optischen Wellenlängen-Multiplexsignals (540) in mindestens zwei Signalteile, die das gesamte optische Spektrum des optischen Wellenlängen-Multiplexsignals umfassen, wobei das optische Wellenlängen-Multiplexsignal eine Mehrzahl von optischen Signalen umfasst, die optischen Kanälen eines optischen Kanalnetzes entsprechen,

- einen ersten Demultiplexer (560), umfassend einen Eingang (561), verbunden mit einem Ausgang des optischen Splitters (550) zum Empfang eines ersten Signalteils, und

- einen zweiten Demultiplexer (570), umfassend einen Eingang (571), verbunden mit einem Ausgang des optischen Splitters (550) zum Empfang eines zweiten Signalteils,

worin

- der erste Demultiplexer (560) eine erste Filtereinheit mit einer ersten Filterfunktion zur Filterung der an seinem Eingang (561) empfangenen optischen Signale umfasst, um eine erste optische Kanalgruppe bereitzustellen, umfassend einen oder mehrere optische Kanäle an einem ersten Ausgang des ersten Demultiplexers (560),

- der zweite Demultiplexer (570) eine zweite Filtereinheit mit einer zweiten Filterfunktion zur Filterung der an seinem Eingang (571) empfangenen optischen Signale umfasst, um eine zweite optische Kanalgruppe bereitzustellen, umfassend einen oder mehrere optische Kanäle an einem ersten Ausgang des zweiten Demultiplexers (570),

- sich die Bandbreiten der ersten und zweiten Filterfunktion teilweise überlappen, d.h., die Bandbreiten der ersten und zweiten Filterfunktion bei einer Dämpfung von unter 3 dB mit der Überlappung beginnen, und sich bei Dämpfungen von 3 dB oder höher überlappen

- ein Kanal der ersten optischen Kanalgruppe und ein Kanal der zweiten optischen Kanalgruppe nebeneinanderliegende Kanäle des optischen Kanalnetzes sind.

10. Demultiplexsystem nach Anspruch 9, worin der erste und zweite Demultiplexer beide einen wellenlängenabhängigen Schalter (860, 870) mit frei programmierbarer Filterung für jeden Eingang des ersten und zweiten Multiplexers (860, 870) umfassen.

11. Demultiplexsystem nach einem beliebigen der Ansprüche 9 bis 10, worin der erste Demultiplexer (560, 860) zur Bereitstellung einer weiteren Kanalgruppe mindestens einen zweiten Ausgang umfasst, wobei die weitere Kanalgruppe zu der ersten, am ersten Ausgang des ersten Demultiplexers (560, 860) bereitgestellten Kanalgruppe einen Abstand durch eine spektrale Lücke aufweist, die eine Breite von mindestens einem Kanalabstand umfasst, und/oder der zweite Demultiplexer (570, 870) mindestens einen zweiten Ausgang zur Bereitstellung einer weiteren Kanalgruppe umfasst, wobei die weitere Kanalgruppe zu der ersten, am ersten Ausgang des zweiten Demultiplexers (570, 870) bereitgestellten Kanalgruppe einen Abstand durch eine spektrale Lücke aufweist, mit einer Breite von mindestens einem Kanalabstand.

12. Demultiplexsystem nach einem beliebigen der Ansprüche 9 bis 11, worin konsekutive Kanäle oder konsekutive Kanalgruppen, die jeweils eine Gruppe sukzessiver Kanäle umfassen, alternierend an den Ausgängen des ersten und zweiten Demultiplexers (560, 570, 860, 870) bereitgestellt werden.

13. Demultiplexsystem nach einem beliebigen der Ansprüche 9 bis 12, worin die erste Filterfunktion zur Filterung des einen oder der multiplen optischen Signale am Eingang des ersten Demultiplexers (560, 860) eine breitere Filterbandbreite als die gesamte Signalbandbreite der ersten optischen Kanalgruppe umfasst, und/oder die zweite Filterfunktion zur Filterung des einen oder der multiplen optischen Signale am Eingang des zweiten Multiplexers (570, 870) eine breitere Filterbandbreite als die gesamte Signalbandbreite der zweiten optischen Kanalgruppe umfasst.

14. Optisches Empfangssystem, umfassend:

- ein optisches Demultiplexsystem (500b) nach einem beliebigen der Ansprüche 9 bis 13, und
- mindestens zwei kohärente Empfänger zum Empfang der gefilterten optischen Signale von den Ausgängen des ersten und zweiten Demultiplexers (560, 570, 860, 870).

**Revendications**

1. Système de multiplexage optique (500a) comprenant :

- un premier multiplexeur (510) comprenant une première entrée (511) pour recevoir un premier ensemble de canaux optiques contenant un ou plusieurs canaux optiques d'une grille de canaux optiques ;
- un deuxième multiplexeur (520) comprenant une première entrée (521) pour recevoir un deuxième ensemble de canaux optiques contenant un ou plusieurs canaux optiques de la grille de canaux optiques ; et
- un coupleur optique (530) ne fournissant pas de fonction de filtrage pour transmettre le premier et le deuxième ensembles de canaux via un chemin de transmission optique commun (540), les entrées (531) du coupleur optique (530) étant couplées avec les sorties (512, 522) du premier et du deuxième multiplexeurs (510, 520),

dans lequel

- un canal du premier ensemble de canaux optiques et un canal du deuxième ensemble de canaux optiques sont des canaux adjacents de la grille de canaux optiques ;
- le premier multiplexeur (510) comprend une première unité de filtre fournissant une première fonction de filtrage pour filtrer les signaux optiques d'un ou plusieurs canaux optiques reçus sur la première entrée (511) du premier multiplexeur (510) ;
- le deuxième multiplexeur (520) comprend une deuxième unité de filtre fournissant une deuxième fonction de filtrage pour filtrer les signaux optiques d'un ou plusieurs canaux optiques reçus sur la première entrée (521) du deuxième multiplexeur (520) ; et
- les bandes passantes de la première et de la deuxième fonctions de filtrage se chevauchent partiellement, à savoir que les bandes passantes de la première et de la deuxième fonctions de filtrage commencent à se chevaucher à une atténuation inférieure à 3 dB et se chevauchent à des atténuations de 3 dB et supérieures.

2. Système de multiplexage selon l'une quelconque des revendications précédentes, dans lequel le premier et le deuxième multiplexeurs (810, 820) comprennent chacun un commutateur sélectif en longueur d'onde avec un filtrage librement programmable pour chaque entrée du premier et du deuxième multiplexeurs (810, 820).

3. Système de multiplexage selon l'une quelconque des revendications précédentes, dans lequel la première entrée du premier et/ou du deuxième multiplexeur (510, 520, 810, 820) est couplée à un coupleur optique (880), en option via un amplificateur optique, pour recevoir des signaux optiques multiples sur une seule entrée.

4. Système de multiplexage selon l'une quelconque des revendications précédentes, dans lequel le premier multiplexeur (510, 810) comprend au moins une deuxième entrée pour recevoir un autre ensemble de canaux, l'autre ensemble de canaux étant espacé du premier ensemble de canaux fourni sur la première entrée du premier multiplexeur (510, 810) par un intervalle spectral comprenant une largeur d'au moins un espacement entre canaux et/ou le deuxième multiplexeur (520, 820) comprend au moins une deuxième entrée pour recevoir un autre ensemble de canaux, l'autre ensemble de canaux étant espacé du premier ensemble de canaux fourni sur la première entrée du deuxième multiplexeur (520, 820) par un intervalle spectral comprenant une largeur d'au moins un espacement entre canaux.

5. Système de multiplexage selon l'une quelconque des revendications précédentes, dans lequel le premier et le deuxième multiplexeurs (510, 520, 810, 820) comprennent chacun une pluralité d'entrées, et dans lequel des canaux consécutifs ou des ensembles de canaux consécutifs comprenant respectivement un groupe de signaux de canaux successifs sont couplés en alternance avec les entrées du premier et du deuxième multiplexeur (510, 520, 810, 820).

6. Système de multiplexage selon l'une quelconque des revendications précédentes, dans lequel la première fonction de filtrage pour filtrer le signal optique sur la première entrée du premier multiplexeur comprend une bande passante de filtre supérieure à la bande passante totale du signal du premier ensemble de canaux optiques et/ou la deuxième fonction de filtrage pour filtrer le signal optique sur la première entrée du deuxième multiplexeur comprend une bande passante de filtre supérieure à la bande passante totale du signal du deuxième ensemble de canaux optiques.

7. Système de multiplexage selon l'une quelconque des revendications précédentes, dans lequel le chevauchement des bandes passantes des première et deuxième fonctions de filtrage est plus petit que l'espacement entre canaux de la grille de canaux ou plus petit que ½ espacement entre canaux.

8. Système de transmission optique comprenant au moins deux émetteurs optiques pour générer des signaux optiques destinés à être disposés dans des canaux optiques adjacents d'une grille de canaux optiques ; et
le système de multiplexage optique (500a) selon l'une quelconque des revendications 1 à 8, dans lequel une sortie d'un premier émetteur optique est couplée avec la première entrée du premier multiplexeur (510, 810) et une sortie d'un deuxième émetteur optique est couplée avec la première entrée du deuxième multiplexeur optique (520, 820).

9. Système de démultiplexage optique (500b) comprenant :

- un diviseur optique (550) ne fournissant pas de fonction de filtrage pour diviser un signal optique multiplexé en longueur d'onde reçu d'un chemin de transmission optique (540) en au moins deux parties de signal comprenant la totalité du spectre optique du signal optique multiplexé en longueur d'onde, le signal optique multiplexé en longueur d'onde comprenant une pluralité de signaux optiques correspondant à des canaux optiques d'une grille de canaux optiques ;

- un premier démultiplexeur (560) comprenant une entrée (561) connectée à une sortie du diviseur optique (550) pour recevoir une première partie de signal ; et
- un deuxième démultiplexeur (570) comprenant une entrée (571) connectée à une sortie du diviseur optique (550) pour recevoir une deuxième partie de signal ;

dans lequel

- le premier démultiplexeur (560) comprend une première unité de filtre fournissant une première fonction de filtrage pour filtrer les signaux optiques reçus sur son entrée (561) afin de fournir un premier ensemble de canaux optiques comprenant un ou plusieurs canaux optiques sur une première sortie du premier démultiplexeur (560) ;
- le deuxième démultiplexeur (570) comprend une deuxième unité de filtre fournissant une deuxième fonction de filtrage pour filtrer les signaux optiques reçus sur son entrée (571) afin de fournir un deuxième ensemble de canaux optiques comprenant un ou plusieurs canaux optiques sur une première sortie du deuxième démultiplexeur (570) ;
- les bandes passantes de la première et de la deuxième fonctions de filtrage se chevauchent partiellement, à savoir que les bandes passantes de la première et de la deuxième fonctions de filtrage commencent à se chevaucher à une atténuation inférieure à 3 dB et se chevauchent à des atténuations de 3 dB et supérieures, et
- un canal du premier ensemble de canaux optiques et un canal du deuxième ensemble de canaux optiques sont des canaux adjacents de la grille de canaux optiques.

10. Système de démultiplexage selon la revendication 9, dans lequel le premier et le deuxième démultiplexeurs comprennent chacun un commutateur sélectif en longueur d'onde (860, 870) avec un filtrage librement programmable pour chaque sortie du premier et du deuxième démultiplexeurs (860, 870).

11. Système de démultiplexage selon l'une quelconque des revendications 9 à 10, dans lequel le premier démultiplexeur (560, 860) comprend au moins une deuxième sortie pour fournir un autre ensemble de canaux, l'autre ensemble de canaux étant espacé du premier ensemble de canaux fourni sur la première sortie du premier démultiplexeur (560, 860) par un intervalle spectral comprenant une largeur d'au moins un espacement entre canaux et/ou le deuxième démultiplexeur (570, 870) comprend au moins une deuxième sortie pour fournir un autre ensemble de canaux, l'autre ensemble de canaux étant espacé du premier ensemble de canaux fourni sur la première sortie du deuxième démultiplexeur (570, 870) par un intervalle spectral comprenant une largeur d'au moins un espacement entre canaux.

12. Système de démultiplexage selon l'une quelconque des revendications 9 à 11, dans lequel des canaux consécutifs ou des ensembles de canaux consécutifs comprenant respectivement un groupe de canaux successifs sont fournis en alternance sur les sorties du premier et du deuxième démultiplexeurs (560, 570, 860, 870).

13. Système de démultiplexage selon l'une quelconque des revendications 9 à 12, dans lequel la première fonction de filtrage pour filtrer le ou les signaux optiques à l'entrée du premier démultiplexeur (560, 860) comprend une bande passante de filtre plus grande que la bande passante totale du signal du premier ensemble de canaux optiques et/ou la deuxième fonction de filtrage pour filtrer le ou les signaux optiques à l'entrée du deuxième démultiplexeur (570, 870) comprend une bande passante de filtre plus grande que la bande passante totale du signal du deuxième ensemble de canaux optiques.

14. Système de réception optique comprenant :

- un système de démultiplexage optique (500b) selon l'une quelconque des revendications 9 à 13 ; et
- au moins deux récepteurs cohérents pour recevoir les signaux optiques filtrés provenant des sorties du premier et du deuxième démultiplexeurs (560, 570, 860, 870).

Fig. 1

Fig. 2

Fig. 3

Fig. 4

Fig. 5

Fig. 6

Fig. 7

Fig. 8

Fig. 9

Fig. 10

Fig. 11

EP 2 919 404 B1

**EP 2 919 404 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012163301 A1
- WO 02054642 A2
- WO 0119007 A1